(19) Europäisches Patentamt / European Patent Office / Office européen des brevets

(11) **EP 2 372 385 A1**

(12) **EUROPEAN PATENT APPLICATION**

(43) Date of publication:
**05.10.2011 Bulletin 2011/40**

(51) Int Cl.:
*G01S 3/48* (2006.01)          *G01S 13/82* (2006.01)

(21) Application number: **11157390.3**

(22) Date of filing: **08.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.03.2010 GB 1004989**

(71) Applicant: **Guidance IP Ltd**
**Meridian Business Park**
**Leicester**
**LE19 1RP (GB)**

(72) Inventor: **Patrick, David**
**Biggleswade, Bedfordshire SG18 0JW (GB)**

(74) Representative: **Beck, Simon Antony et al**
**Withers & Rogers LLP**
**Goldings House**
**2 Hays Lane**
**London**
**SE1 2HW (GB)**

(54) **An apparatus for measuring the relative direction of a radio signal**

(57)    An apparatus for measuring the relative direction of an incoming radio signal, the apparatus comprising at least first and second antennas, and comparison means for comparing the incoming radio signal as received at the first antenna with the incoming radio signal as received at the second antenna, and from the result of the comparison transmitting a measurement of the relative direction.

FIG. 8

**Description**

FIELD OF THE INVENTION

The present invention relates to an apparatus that can measure the relative direction of an incoming radio signal, and to a radar system including an active target for use in or with a radar system and including the facility to measure the direction of at least one radar beam. The measurement could be made in a 3D space, but for systems that operate in a roughly 2D space, i.e. at fixed height such as on the surface of the sea, then a measured azimuth is generally sufficient.

BACKGROUND TO THE INVENTION

Radar can be used to measure range and distance to a reflective object, which is often referred to as a "target". However, a return may be achieved from all possible reflecting surfaces, which in the case of a large structure such as a ship or oil rig can give a large return signal, of extended angular range and a range of distances. This is generally acceptable for standard collision avoidance applications.

However such diverse returns of the radar signal are not useful if it is desired to use radar to measure distance to a target, such as a vessel position relative to an oil rig, to a few metres or less.

In such systems not only is it desirable to know the range to an object, but it can also be highly advantageous to know the relative angle between a reference axis of the object and the incoming radar beam. For many objects the reference axis may conveniently be defined by a shape or normal direction of travel of an object. Thus for a ship the reference axis may run from the bow to the stem of the ship, parallel with the keel thereof.

SUMMARY OF THE INVENTION

According to a first aspect of the present invention there is provided an apparatus for measuring the relative direction of an incoming radio signal, the apparatus comprising at least first and second antennas, and comparison means for comparing the incoming radio signal as received at the first antenna with the incoming radio signal as received at the second antenna, and from the result of the comparison transmitting a measurement of the relative direction, wherein the measurement of relative direction is used to modulate a version of the received radio signal which is then retransmitted.

Advantageously the relative direction of the incoming radio signal with respect to the apparatus is determined by comparing the relative phases of a signal received at the at least first and second antennas.

Phase comparison can be done in many ways, but a computationally simple way is to supply first and second signals from the first and second antennas, respectively, to a mixer. As the signals have the same frequency, the frequency difference component formed by the mixing process is a DC signal, and the amplitude of the signal is indicative of the phase difference between the first and second signals. The phase difference is representative of the angle that the radar beam makes to a plane containing the first and second antennas.

Where the illuminating radiation is of a short wavelength the phase difference may be able to pass through several peaks and troughs over the range of angles. These can also be counted as part of the process for resolving the direction of the incoming beam, or for measuring changes in direction of the beam.

In some embodiments more than one antenna pair may be formed, giving a mixture of angular resolutions if desired.

Phase measurement is particularly suited for use with continuous wave radar systems. However where a radar has a pulsed beam, then time of flight analysis might be used.

Advantageously the amplitude of the frequency difference signal is compared with the amplitude of the incoming radar signal so as to provide a normalised measurement of the phase angle. Alternatively the incoming signals may be amplified to achieve a predetermined amplitude prior to being provided to the comparison means.

The frequency difference signal which forms the beam direction measurement may be converted into a digital word for transmission back to a radar system illuminating the target. Alternatively the signal or a processed beam direction measurement may be transmitted to a processing station over a further data channel.

Because the beam angle measurement is transmitted back to the radar system by modulation of the radar signal returned to the radar system it is advantageous to include an identity code which identifies the apparatus which made the measurement. This is advantageous if two such measurement systems are in respective active radar targets, and both are concurrently illuminated by the radar beam.

The identity code may, for example, be associated with the active radar target, and hence may be stored in a memory within the target. However, the identity code might relate to another item, such as a bracket or other structure on part of a further structure, such as a ship or an oil rig, and the identity code may be read by the active target or entered into the active target when the active target is being positioned. The means for receiving the identity code may comprise a keyboard, but other items such as bar code readers, RF tags or near field readers might be used when a RF or other memory tag is attached to the bracket or structure. Alternatively, where the active target includes a data input for receiving data from other devices, the identity may be sent to the active target via the data input.

Preferably the active target amplifies an incoming radar beam, modulates it with at least information concerning the direction of the incoming beam and retransmits the radar signal back to the radar transmitter/receiver.

Preferably the modulator of the active target is a single sideband suppressed carrier (SSBSC) modulator. This is known to be efficient as signal power is not wasted on a carrier, which consumes power but conveys little information - except from identifying the presence of the carrier. However, in the context of the present invention and ranging systems using an active target constituting an embodiment of the present invention, the SSBSC modulation conveys additional advantages.

Advantageously a frequency shift keying (FSK) scheme is employed to encode a digital word or words conveying at least the measurement of relative direction. FSK has the advantage that the radar signal is modulated in a form that is quite easy to detect, and which exists irrespective of the value of the data payload. This is to be compared with, for example, AM modulation where "1" might represent returning 90% of the transmit power and a "0" might represent returning 10% of the transmit power of the amplified signal. In such a scheme it becomes difficult to distinguish between a low signal return strength because the signal is encoding a "0" and low signal return because of multi-path destructive interference. Other modulation schemes, such as phase shift keying, PSK, might equally be employed to encode the identity signal. PSK provides similar advantages to FSK modulation.

Preferably the data, such as the measurement of relative direction and possibly an identity is retransmitted periodically whilst the active target is illuminated by a radar signal above a predetermined intensity. Thus if for example the active target is powered by one or more batteries, then it can de-power into a resting state when not illuminated by a radar and hence conserve battery life.

Advantageously the active target can transmit additional data back to a suitable radar system such that additional data in excess of the measurement of direction, can be provided to the radar system. Such additional data may be provided by an external or internal data source. Data may include GPS position, vessel speed, vessel heading, sea state parameters, data from strain gauges or other external devices, and so on. Such external data may be transmitted to the active target wirelessly or sent over a databus. Similarly the identity may be provided to the active target wirelessly or via a databus.

In a preferred embodiment the active target includes means for providing signal path diversity.

According to a second aspect of the present invention there is provided a radar system comprising a radar transmitter and receiver adapted to co-operate with an active radar target according to the first aspect of the present invention so as to extract at least a direction datum from a signal returned by the active target.

## BRIEF DESCRIPTION OF THE DRAWINGS

The present invention will now be described, by way of example only, with reference to the accompanying Figures, in which:

Figure 1 schematically illustrates a vessel illuminated by a radar and a plurality of radar returns R1 to R4 which may result, each having a different range from the radar antenna;

Figures 2a and 2b schematically illustrate how a chirped radar signal can provide very accurate distance and relative speed data;

Figure 3 schematically illustrates a circuit for reading an identity code from a memory and producing a baseband frequency shift keyed signal;

Figure 4 illustrates the spectrum of a frequency shift keyed signal when used to modulate an RF carrier;

Figure 5 illustrates the spectrum of Figure 4 when a SSBSC modulator is used;

Figure 6 illustrates a configuration of a SSBSC modulator in an active target constituting an embodiment of the present invention;

Figure 7 illustrates an arrangement for measuring the azimuth of an incoming radar beam;

Figure 8 illustrates an embodiment of the present invention incorporating two receive/transmit channels at different heights;

Figure 9 schematically illustrates a radar system operating in accordance with the present invention;

Figure 10 illustrates a further embodiment of the invention; and

Figure 11 shows the magnetic input of Figure 10 in greater detail.

DESCRIPTION OF PREFERRED EMBODIMENTS

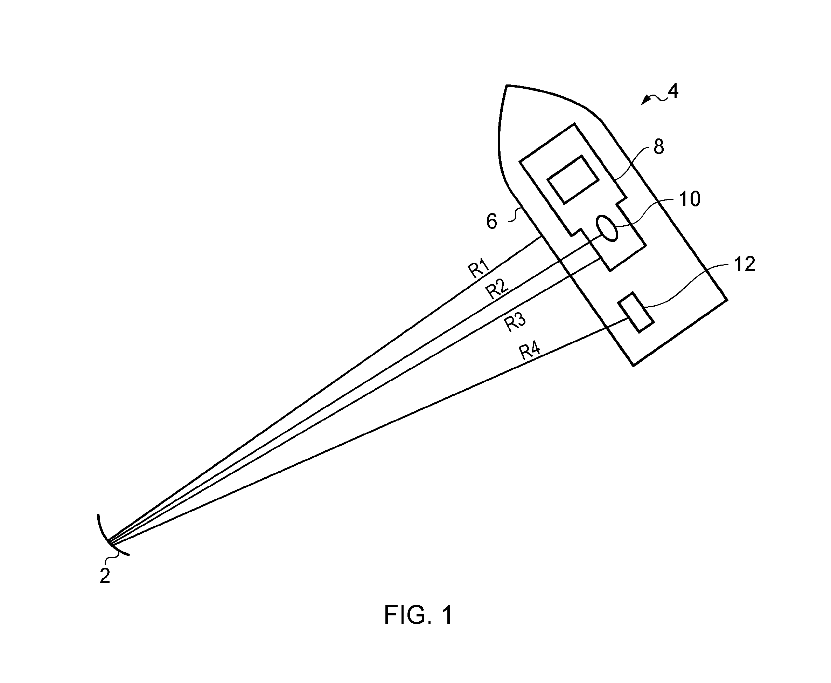

As noted hereinbefore, it can be difficult to obtain a very precise radar range to a complex target. Figure 1 illustrates a situation where a radar, schematically represented by a parabolic dish 2 (although no inference should be taken from this as the invention is equally suitable for use with arrays of antennas operable to form beam steered arrays) which transmits a radar signal that illuminates a complex target 4, such as a large ship. The ship has a hull 6, a superstructure 8, a funnel 10 and an item of cargo 12. Each of these items may give a radar return, and as shown each reflecting item has a slightly different distance R1 to R4 respectively from the radar 2.

This is not a problem if one merely wishes to know that the ship is there and to get a rough distance to it, e.g. 1.5 nautical miles (1 nautical mile = 1854 m).

However, some navigation, such as pipe laying and oil rig positioning requires the distance between objects to be measured to around 1 metre or less.

Knowing the distance to a ship, possibly with a resolution of a metre or so, is useful but it may not be sufficient for high performance positioning of anchors, pipelines and so on.

The vessels engaged in such tasks are inevitably subject to wind and tide forces, and where a vessel has, for example, a high superstructure towards the bow of the vessel and a low working deck elsewhere, or where such a vessel has gear of some sort deployed over her stem, then in cross winds the vessel will tend to drift sidewise and also pivot about its own axis when not making way - or only moving slowly. If this occurs it is desirable for a controller (computer or human) to be aware of the heading of a vessel as well as its range. Heading could be picked up by an electronic compass and the heading data used to modulate the radar beam. However, alternatively or additionally means may be provided to measure an incoming angle of the radar beam with respect to a reference direction. Thus if, for example, an active radar target including a beam angle measurement system is attached to the superstructure of the vessel, then it may measure the angle of the radar beam as it traverses path R3 from the radar reflector, and may return that measurement to radar 2.

The present invention can, in principle, be used with any radar system. However the preferred embodiments of the invention are expected to be used with a high precision radar system that can achieve distance measurement to only a few metres or less.

Frequency modulated continuous wave (FMCW) is a known technique which can achieve measurements to within this required accuracy. This technique has the advantage over pulsed radar techniques in that the target can be continuously illuminated by the radio frequency energy of the radar, thereby allowing additional signal and data processing techniques to be used in conjunction with the radar ranging.

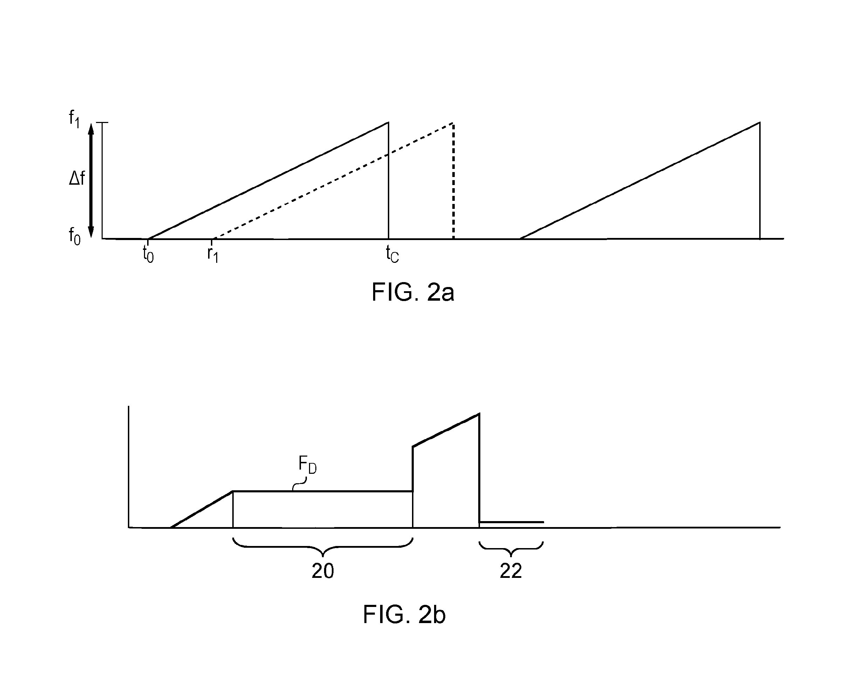

Although FMCW is known, its basic principles will be briefly discussed for completeness, with respect to Figures 2a and 2b. FMCW is often driven with a triangle frequency change waveform. However, for convenience, and to demonstrate the power of this technique, we will consider a simplified example where the radar is modulated with a sawtooth chirp, and a gap exists between each chirp.

The radar frequency is frequency modulated such that it starts at frequency $f_0$ at time to and then increases at a known rate up to a maximum frequency $f_1$ at time $t_c$. This is generally known as a 'chirp' and the chirp extends from to to $t_c$, as illustrated in Figure 2a.

Now suppose at time to the radar is illuminating a target. At time to the radio signal having a frequency $f_0$ exits the radar antenna, and then travels to the target, is reflected and returns. The journey takes a round trip travel time such that at time $r_1$ the signal, having a frequency $f_0$ is received at the radar.

In the meantime the radar frequency has been changing with the chirp, at a rate $\Delta f/T_c$. The difference between the instantaneous transmission frequency and the instantaneous return frequency is proportional to the journey time of the radar signal to the target and back. These frequencies can be mixed together by a mixer and produce a down converted beat frequency $F_b$ that is proportional to the distance to the target, as illustrated in Figure 2b.

In fact, ignoring all other factors, such as Doppler shift

$$\text{Range} = \frac{F_b \times C \times T}{2 \times \Delta F}$$

where C = speed of light

$$T = t_c - t_0$$

$$\Delta F = f_1 - f_0$$

It can be seen that in this example, apart from the time period 20 where the beat frequency is nominally constant and is a function of the distance to the target, there is also another period 22 where the transmit and return frequencies are nominally the same, so any frequency shift here is a Doppler shift allowing relative velocities to be identified.

Of course, with multiple reflections occurring there is still the potential for several return frequencies, rather than the monotone $F_b$ described here.

In order to facilitate ranging, an active target can be used, but to distinguish itself from the background, the active target needs to stand out, and it can do this by transmitting a modified signal.

The modified signal may be modified by one or more of

transmitting other data - such as relative beam angle data so that the signal could not be a "simple" radar reflection transmitting an identity signal

a distinctive modulation scheme.

It is useful to consider these approaches in turn.

DIRECTION DATA

Returning to Figure 1, it can be seen that the ship 4 has a "forward" direction in which it naturally travels. Consequently to know about the dynamics of motion of the ship it is advantageous to know more than just the range to the ship. It is desirable to have other data such as the relative direction of the ship to the radar beam.

This can be achieved by measuring the angle of illumination that the incoming radar makes with the active target. This, combined with knowledge about placement of the target on the vessel allows the relative angle of the vessel to be determined.

There are several approaches that could be used, such as a mechanically swept narrow beam antenna; multiple fixed narrow beam antennas, each with a respective direction of look, or phased array synthesis of a narrow beam antenna.

A suitable approach that is robust to implement is a phase comparative approach as this can be performed with a mixer.

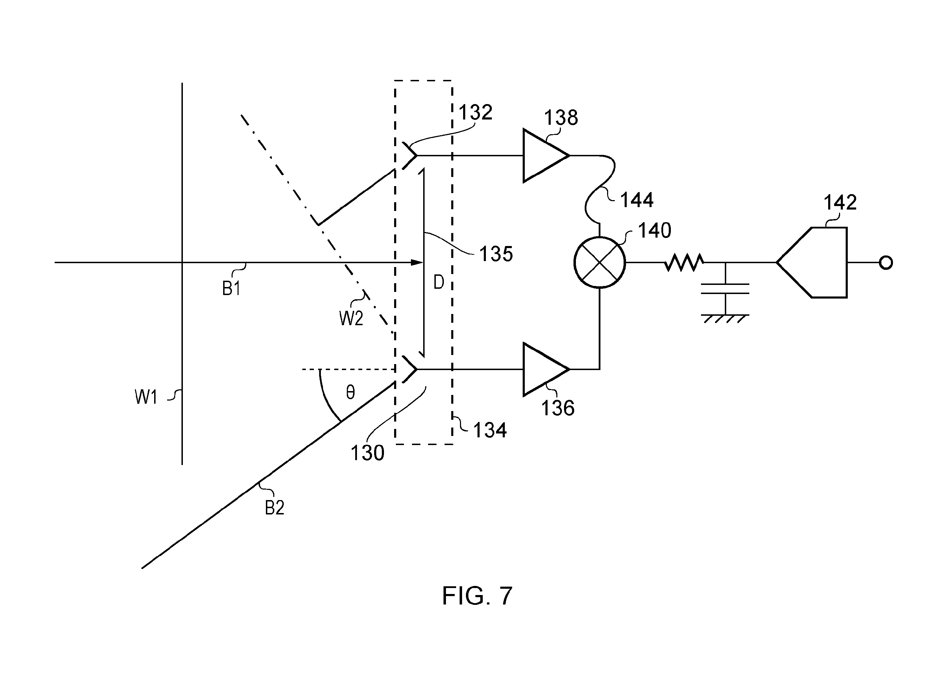

Figure 7 illustrates an active target constituting an embodiment of the invention and comprising first and second receive antennas 130 and 132 that are spaced apart by a known distance D within a housing 134. Although the drawing is schematic, the housing is shown to highlight that the target can be relatively thin, i.e. be quite planar, and hence easy to attach to surfaces.

If the incoming radar beam is normal to the plane 135 containing the antennas 130 and 132, as illustrated by beam B1, then a notional wave front arrives at both antennas at the same time. Hence the phases of the signals output by the antennas are identical.

However if an oblique beam B2 illuminates the active reflector then, as shown, a notional wave front W2 arrives at antenna 130 before it arrives at antenna 132. This gives rise to an extra "time of flight" which is proportional to the distance D and the sine of the angle of illumination θ.

This in turn gives rise to a phase change which depends on the wavelength of the radiation used by the radar.

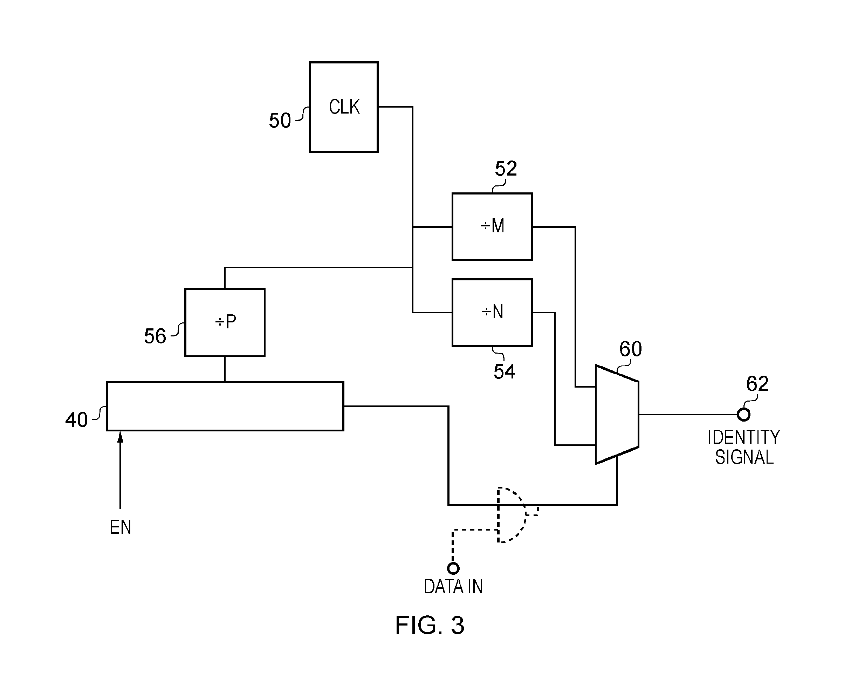

As shown the output of each antenna is provided to a respective amplifier 136, 138 which advantageously both amplifies and limits the signal amplitude. The outputs of the amplifiers are then provided to a mixer 140 which multiplies the signals together, forming a sum frequency, and more importantly a difference frequency which is a DC representation of the phase difference, and which is digitised by a digital to analog converter 142. The DAC output can be placed in a data word and retransmitted to the radar, using the circuit shown in Figure 3.

Returning to Figure 7, we have a choice of whether the normal illumination gives a maximum or a minimum in the output signal of the mixer 140, or indeed an intermediate value.

If a maximum is required, then all the path lengths are matched within the receiver, or differ from each other by a multiple of $^\lambda/_2$ where $\lambda$ is the wavelength of the radar used to illuminate the target. If however we want a null, then an additional path length of $^\lambda/_4$ (or 3, 5, 7, 9 etc $^\lambda/_4$) as indicated by 144 can be inserted into one of the signal paths.

Arguably of more use in general navigation is setting the output to be an intermediate value, say 50% of maximum when the receiver is illuminated by a normally incident beam. As the angle of illumination changes from perpendicular to the face of the target, the output signal will increase for one direction of change and decrease for another. This gives a measurement of angle from the normal, and the direction as a directed number (e.g. + or -) from the normal. This approach can be achieved by inserting $^\lambda/_8$ path delay, or suitable multiples thereof.

It can be observed that due to the periodic nature of the incoming radio wave it is possible for two different values of $\theta$ to give the same output if the extra path length gives rise to the same phase shift in both cases.

Closely spaced antennas are much less likely to suffer from such directional ambiguity, although at a cost of reduced resolution. More widely spaced antennas are far more likely to suffer from such measurement ambiguity, but offer improved resolution. Thus if an electronic compass is used to pass a vessel's heading to the monitoring radar station, then relatively widely spaced antennas (which depending on the radar frequency used may only be around 0.5 m apart or less) may give an early indication of the direction of turn of a vessel, before this data is derivable by a magnetic compass.

It may be desirable to place two or more pairs of receive antennas at different separations within the target so as to provide both 'coarse' and 'fine' measurement systems. An antenna may be common to two or more of the measurement systems.

Once direction data has been acquired, it needs to be returned to the radar system.

MODULATING THE RETURN SIGNAL WITH THE IDENTITY.

The simplest approach to returning the signal would be simple amplitude modulation of the radar signal. However this is a poor approach as a significant amount of the transmit power would be in the carrier frequency, and as this is identical to the frequency used to illuminate the target, then oscillation may result. The need to avoid oscillation would require the use of only a low gain amplifier, and probably physically separate and widely spaced apart receive and transmit antennas. This is at odds with the requirement to provide a relatively discrete physical target so as to achieve the desired range discrimination of 1 metre or less.

The inventors realised that the oscillation risk could be much reduced by offsetting the returned data from the carrier frequency and/or suppressing the carrier. This can be achieved by techniques such as Frequency Shift Keying (FSK) as will be discussed later, together with an exemplary circuit for performing FSK modulation.

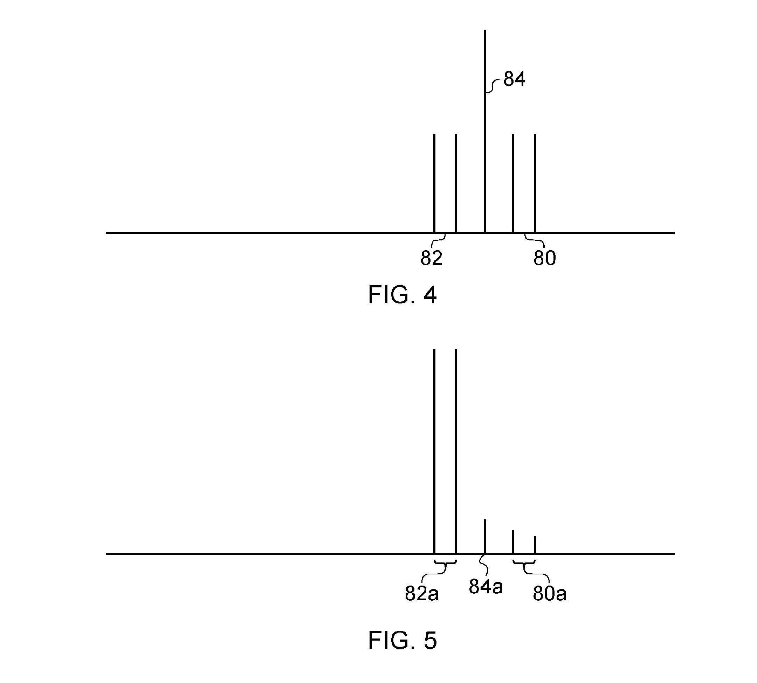

Representing digital data by frequencies $M_0$ and $M_1$ has the effect of moving the return data, in the frequency domain, into sidebands positioned around the instantaneous carrier frequency. This is shown in Figure 4 where upper 80 and lower 82 sidebands each have signals for "1" and "0" spaced 1.75 and 2.25 MHz away from a carrier 84.

Additionally, at the receiver harmonics (not shown) of the sidebands are received, together with carriers that are displaced in frequency because they were reflected from a reflector at a different distance from the radar.

These sidebands are unwanted as they have the potential to generate signals within the receiver that can interfere with a wanted signal.

This is overcome in one embodiment of the invention by using a single sideband suppressed carrier modulation scheme. Ideally only one sideband is selected for transmission, although as shown in Figure 5 in reality the carrier 84a and the upper sideband 80a can be significantly suppressed, say by 36 dB or so, compared to a lower sideband 82a.

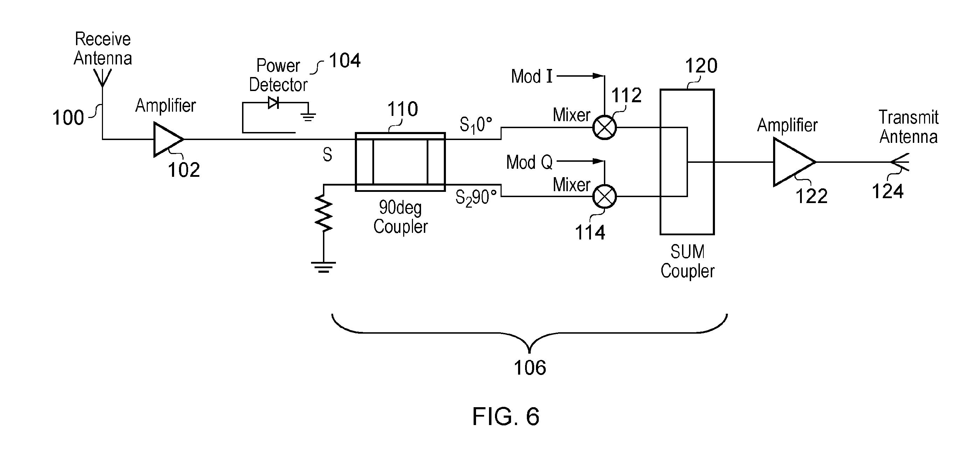

Several approaches are known for SSBSC modulation, although for microwave frequencies the phasing method implemented using a Hartley modulator is appropriate. An embodiment of a modulator in accordance with the present invention is shown in Figure 6. The modulator comprises a receive antenna 100 that provides an input to a first amplifier 102. A power detector 104 follows the amplifier 102 and forms part of a power control loop with the amplifier 102 so as to control the signal at the output the amplifier to lie with a target power range, and/or reduce power consumption when the active target is not being illuminated by a radar.

The amplifier output is provided as an input to a Hartley modulator 106. The Hartley modulator is well known to the person skilled in the art, but the following brief explanation is given to assist the reader. An input signal S is passed through a 90° coupler 110 which provides two output signals S1 and S2. S1 is in phase with S, i.e. has a 0° phase shift whereas S2 is shifted by 90°. Thus two signals out of phase are produced.

These can be represented as

$$S1 = \sin W_m T$$

$$S2 = \cos W_m T$$

The signals S1 and S2 are provided to first inputs of balanced mixers 112 and 114. The mixers also receive in-phase and 90° shifted versions of the modulating signal, i.e. the 1.75 and 2.25 MHz signals generated by the circuit of Figure 3. This can be achieved either by a phase shifting filter, or running the circuit at higher frequencies and then using dividers to divide down to the desired frequencies and to control the phases.

Thus the signal inputs, labelled "MODI" and "MODQ" are provided to the mixers 112 and 114 respectively.

$$MODI = \sin W_s T$$

$$MODQ = \cos W_s T$$

The outputs of the mixers are summed in a summing coupler 120.

The outputs of the mixers can be represented, using the trigonometric identities.

$$\sin A \cdot \sin B = \tfrac{1}{2} \cos (A - B) - \tfrac{1}{2} \cos(A + B)$$

$$\cos A \cdot \cos B = \tfrac{1}{2} \cos (A + B) - \tfrac{1}{2} \cos(A - B)$$

to give

$$output = \tfrac{1}{2}\cos(W_m T - W_s T) - \tfrac{1}{2}\cos(W_m T + W_s T) + \tfrac{1}{2}\cos(W_m T + W_s T) + \tfrac{1}{2}\cos(W_m T - W_s T)$$
$$= \tfrac{1}{2}LSB - \tfrac{1}{2}USB + \tfrac{1}{2}USB + \tfrac{1}{2}LSB$$
$$= LSB$$

The lower sideband signal is then amplified by a further amplifier 122 and then provided to transmit antenna 124, which may be a patch array.

Thus the modulation scheme in conjunction with the FSK or PSK encoding gives a frequency shift between the input and the output frequencies of at least 1.75 MHz, and also suppresses the carrier, thereby reducing the risk of self sustaining oscillation and enabling a higher gain to be applied by the amplifiers 102 and 122. The isolation can be further improved by using polarisation sensitive receive and transmit antennas and arranging for them to work with orthogonal polarisation states, e.g. vertically and horizontally linearly polarised radiation, but circular polarisations may also be used. Thus the receive antenna may be responsive to vertically polarised RF energy whereas the transmit antenna transmits horizontally polarised RF energy or vice versa.

Thus the active target can transmit an identity, and with increased gain, so as to help it stand out against other radar returns. Signal processing at the radar can be used to extract the target identity, thereby allowing multiple targets to be used, and potentially to be quite closely spaced.

TRANSMITTING AN IDENTITY

Each active target may be given an identity code that it uses to modulate the returning signal such that the target can be identified from other returns to the radar system.

In a preferred embodiment, a digital identity code is used to modulate the return signal. A particularly useful approach is to amplitude modulate the returning radar signal, with the modulation occurring at frequencies $M_1$ and $M_0$ to represent digital "$1_s$" and "$0_s$" respectively of a digital word. This is also known as binary frequency shift keying.

However, a greater number of frequencies could be used to transmit more complex symbols, thereby increasing the information content for a given symbol rate.

Thus a modulation is always returned, irrespective of the digital word or words, but the digital signal can also convey a target identity, and also other data.

In an exemplary embodiment modulation frequencies of 1.75 MHz and 2.25 MHz are chosen to represent the digital 1's and 0's. Figure 3 illustrates a simple circuit to read out an identity from a memory, such as a shift register 40 that gets reset to a predetermined bit pattern representing the identity.

A clock 50 provides a timing and frequency reference. The clock has an output that is provided as an input to dividers 52, 54 and 56 dividing by M, N and P respectively. Outputs of the dividers 52 and 54 are provided to respective inputs of a 2 channel multiplexer, which has a selection input connected to an output of the shift register 40.

If, for example, the clock runs at 15.75 MHz, then if M = 9, the output of divider 52 is a 1.75 MHz signal and in N = 7 then the output of the divider 54 is a 2.25 MHz signal.

If P is much larger than 7 or 9, say 128, then a digital word represented by 1.75 or 2.25 MHz modulation patterns can be transmitted at reasonable data rates, e.g. over 100 Kbits per second.

Once the register 40 is enabled, it successively clocks out the target identity, and the pattern of 1's and 0's is used by the multiplexer to select the correct frequency to be output at node 62.

If it is desired to add further data after transmission of the identity signal then it is easy to modify the circuit to pass the signal from the register 40 via an AND gate as shown in the outline, and to arrange the register to repeatedly output an "1" after the identity has been transmitted.

Thus the AND gate can receive a 1 at its second input whilst the identity is being transmitted, and then subsequently one or more data words that are to be transmitted to convey other information. The sequence is repeated automatically.

The register could have its initial values hard wired, or they could be set by a keyboard, switches, or via any other suitable arrangement. Where a keyboard or switches are used to set the identity then the identity can be that a mounted bracket or similar whose position on a structure is well determined.

A mounting bracket may carry mechanical protrusions, or galvanic connections which allow the identity of the mounting bracket to be passed to the active target when the target is attached to the bracket. The bracket might, in some embodiments, carry a near field memory device, such as an RF ID tag, which contains the identity information, and which is read by the active target. Similarly the active target may include a slot to accept a memory card or USB stick to provide identity information, or it may receive it from a noncontacting memory, or via a data connection from a further device.

The invention has been described in the context of a frequency shift keying modulation scheme. However other schemes, such as phase shift keying could also be used to indicate the identity and/or to convey other information. For example, rather than using two frequencies to indicate a "0" or a "1", a single frequency could be used, 2.25 MHz for example, and a "0" may be represented by a phase change of zero degrees and a "1" may be represented by a phase change of 180°. In such a system a preamble might be included such that the receiver could identify the preamble, which is a known bit sequence, to recover the phases correctly.

SIGNAL PATH DIVERSITY

The radar beam travelling to a target and/or the signal returning may, in fact, comprise multiple signals travelling via dissimilar paths. Thus one portion of the signal may travel directly to the target whilst another portion may reflect from the surface of the sea. The signals interfere with one another, and the interference may be constructive or destructive depending on the relative path lengths.

Destructive interference may cause a return from the target to disappear. In order to address these multiple effects it is desirable to add diversity to the active target. The diversity may be one or more of a distance diversity, and a height diversity. If it is desired to keep the reflector "thin", then height diversity is preferred and hence a second receive and a second transmit antenna are provided, vertically displaced (and optionally horizontally displaced) from the first transmit and receive antennas. In other configurations one of the receive or transmit antennas may be omitted, although this does allow destructive interference in one of the paths between the interrogating radar and the active target to effect the performance of the system compared to providing multiple receive and multiple transmit antennas.

This could be done with two physically separate active targets, but this does not allow synergies to occur from building height diversity into a single unit. The single unit approach allows the height diversity to be controlled to a sensible range as defined by the case of the active target to, for example, around 0.5 to 1 metre. Furthermore the antennas can share the same target identity, or related identities and can return the same additional data.

The returns from the antennas can be frequency or time multiplexed in order that they themselves do not interfere.

Frequency multiplexing can occur by choosing different modulation frequencies to represent the "1"s and "0"s of the digital identity. Thus in the arrangement described hereinbefore the frequencies of 1.75 and 2.25 MHz can be regarded as being centred around 2 MHz. For the second antenna frequencies of 2.5 and 3 MHz may be chosen, giving signals centred around 2.75 MHz.

Alternatively the antennas can be operated in a time multiplexed mode such that for a while the first transmit antenna is active, but the second transmit antenna is not, and then the second transmit antenna is active, but the first is not. This swapping is repeated in a cyclical manner.

Finally a time delay in retransmit times - which could simply comprise an additional path length of several metres or 10's of metres can be added to one of the antennas. The delay may simply be a predetermined length of cable. This causes the returns to appear to come from different ranges, and hence stops them interfering with each other as they have different instantaneous frequencies.

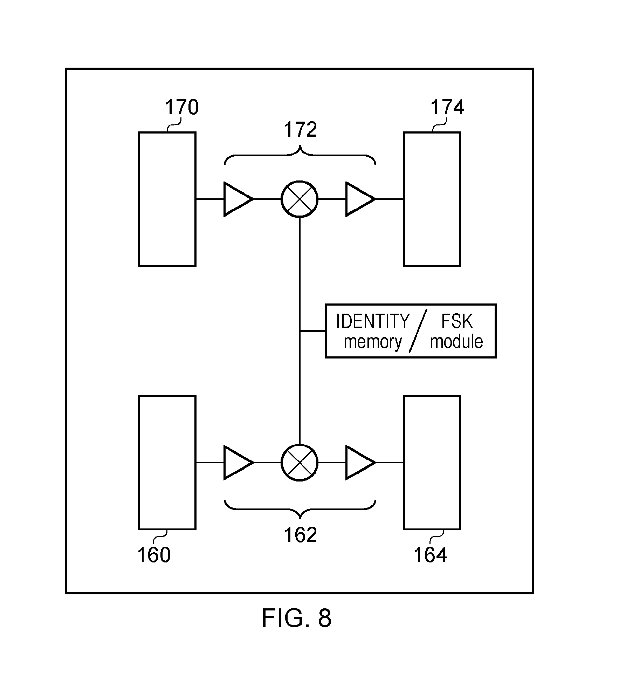

Figure 8 schematically illustrates an active target in which signal path diversity is provided by having two separate receive and transmit channels physically separated from one another. Thus a first channel comprises a patch antenna 160, amplifiers and single sideband suppressed carrier modulators within a block 162 vaguely corresponding to components 102, 106 and 122 of Figure 6 and a transmit antenna 164. A second channel comprises receive antenna 170, an amplification and modulation block 172 and a transmit antenna 174. Both channels share the same identity memory and frequency shift keying circuit, for example as shown in Figure 3, albeit with a further frequency translation being applied to the second channel, such that they transmit the same data but at slightly different frequencies. It therefore becomes much more unlikely that both channels will simultaneously suffer degradation due to destructive interference as a result of multiple propagation paths. Additional transmit or receive antennas may be added to further reduce the potential for destructive interference to adversely impact on operation of the radar ranging system.

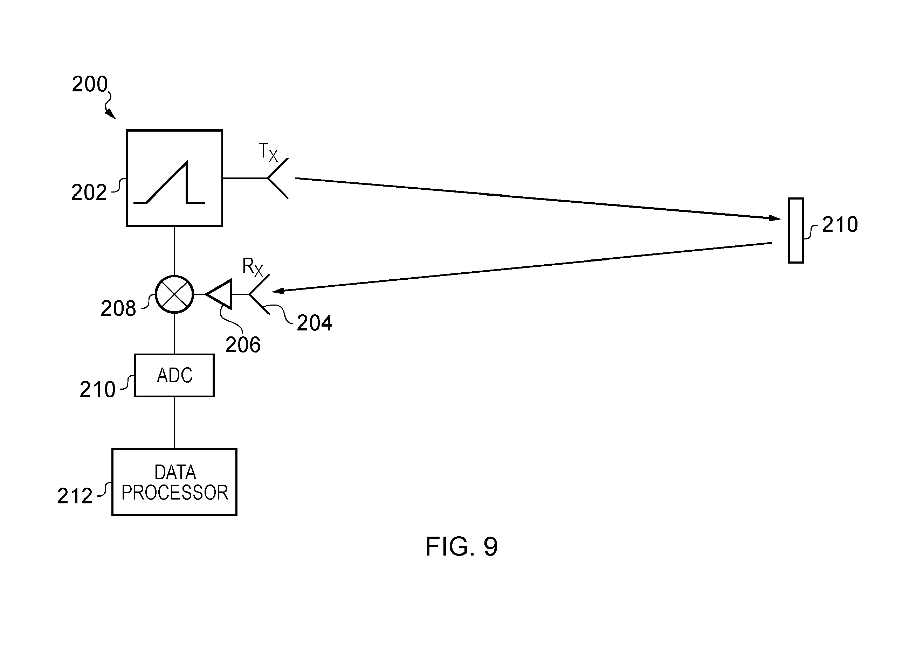

Figure 9 schematically shows a radar ranging and positioning system in which a radar, generally designated 200 comprises a chirped frequency source 202 which provides radio frequency energy, generally in the radar X band (wavelength = 3 cm), or in similar sub 25 cm wavelengths. The radar signal is transmitted towards an active target 210 constituting an embodiment of the invention. As discussed hereinbefore the target amplifies, modulates and returns the radar signal and the returned signal is received by a receive antenna 204, amplified by an amplifier 206, and mixed by mixer 208 with the output of the transmit oscillator 202 to get a beat frequency which is then digitised by an analog to digital converter 210 and provided to a data processor 212. The data processor 212 is adapted to calculate the range to the target based on the beat frequency, but further to take into account further frequency translations as a result of the frequency shift keying scheme introduced at the active target in order to modulate the signal being returned to the radar 200. The data processor is also arranged to analyse the digitised signal to look for signal patterns representative of measured direction data, the target identity, and further data which may also be modulated onto the radar signal. Where the further data may be any one of a plurality of data types a header is advantageously attached to the data in order to signify the type of data that follows the header.

In the height diversity embodiments described thus far, a receive antenna has been paired with a transmit antenna. However to provide further diversity the pairings can be cyclically changed. Furthermore, it is also possible for the pairings of receive and transmit antennas to be arranged to transmit respective identities, rather than the same identity. Advantageously the respective identities are related to one another such that the task of setting up the respective identities is simplified. Thus, for example, where an identity is programmed in to one channel of active target having height diversity, the other identity may be generated automatically from the first identity.

Height diversity may also be provided in the radar 200. Generally the radar system has a rotating transmit antenna and a rotating receive antenna in synchronism with the transmit antenna. Additional receive or/and transmit antennas can be provided, and the transmit antennas may, for example, be driven in a time multiplexed manner. Signals received at the receive antennas may be selected on the basis of whichever signal is strongest, or could be selected in an alternating fashion. Alternatively each received signal may be down converted individually and then the signals combined in a non-destructive manner.

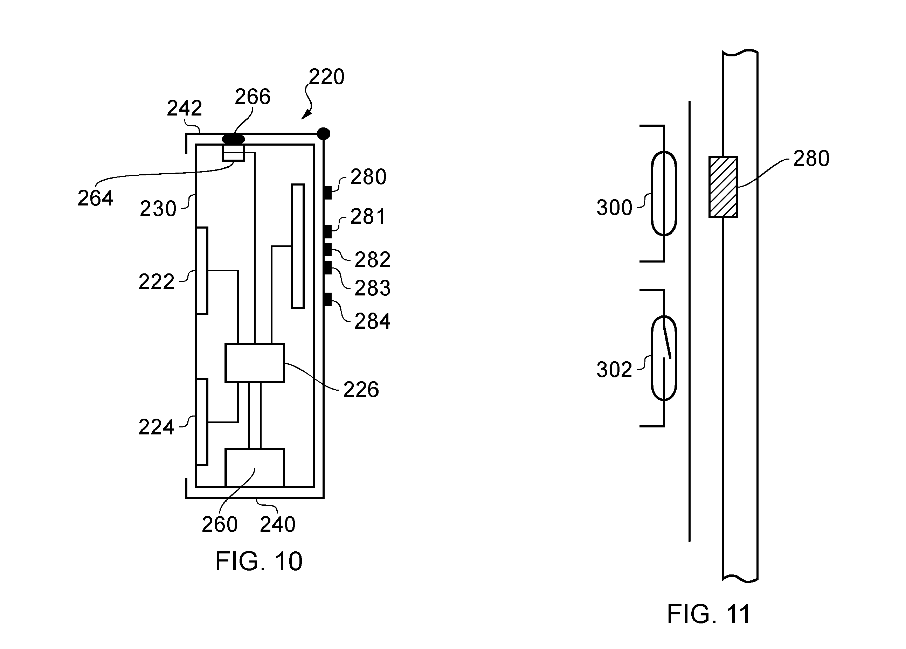

In the embodiment of the active target described with respect to Figure 3, the identity of the active target was held within register 40. In some instances it may be preferable for the identity of the active target to be held by a mounting bracket for the target rather than the target itself. This means that, where the target is battery powered, a target whose batteries are becoming depleted may be removed from a mounting bracket and a new target with fresh batteries attached to the mounting bracket. Once the new target is attached it takes the same identity as the target that has just been removed because that identity is passed to it from the mounting bracket. Such an arrangement is schematically illustrated in Figure 10 where an active target 220 comprises receive and transmit antennas 222 and 224, respectively, co-operating with a modulator 226 and enclosed within a case 230. The case is selectively mountable and demountable inside a mounting frame 240 which in this example is shown having a hinged lid 242 such that the active target 220 can be quickly but securely fixed within the frame. The active target includes a battery 260 which powers the active target. This has the advantage that no external power needs to be routed to the target, but has the disadvantage that the target will need maintenance from time to time in order to replace the battery, which might be done simply by swapping out the active target with a new one. In order to facilitate this the active target includes means for receiving its target identity. In the embodiment shown the active target includes a tag reader 264, such as an RF ID tag reader which is positioned such that it is able to interrogate a corresponding RF ID tag 266 located in the bracket. This has the advantage of protecting the RF ID tag from being lost although similarly the RF ID tag, or some other removable memory device could be attached to the active target around the time that it is installed on the bracket. An alternative approach is to include an array of magnets 280 to 284 whose presence, or absence, with respect to a corresponding magnetic switch, such as a read relay, allows the target identity to be passed to the active target. This arrangement is shown in more detail in Figure 11 where magnet 280 aligns with an associated reed relay 300 in the active target causing the reed relay to close whereas a further reed relay 302 aligns with the gap between magnets 280 and 281 and therefore remains open. It can therefore be seen that by suitable positioning of the magnets with respect to the relay positions a digital identity can be easily and robustly passed between the mounting bracket and the active target.

It is thus possible to provide an improved active target, and a radar system which can benefit from the augmented information that can be returned by the active target.

## Claims

1. An apparatus for measuring the relative direction of an incoming radio signal, the apparatus comprising at least first and second antennas (130, 132), and comparison means (140) for comparing the incoming radio signal as received at the first antenna with the incoming radio signal as received at the second antenna, and from the result of the comparison transmitting a measurement of the relative direction, wherein the measurement of relative direction is used to modulate a version of the received radio signal which is then retransmitted.

2. An apparatus as claimed in claim 1, in which the comparison means comprises a phase comparator (140) to compare the relative phases of the received signal at the first and second antennas.

3. An apparatus as claimed in claim 2, further including a predetermined additional path length (144) in one of the signal paths to a first or second input of the phase comparator.

4. An apparatus as claimed in claim 2 or 3, in which the phase comparator is a mixer (140), and a down-converted signal is representative of the phase difference between the signal received at the first antenna (130 and the signal received at the second antenna(132).

5. An apparatus as claimed in any of the preceding claims, further including a data input for receiving direction data derived by a compass.

6. An apparatus as claimed in any of the preceding claims, further including a modulator (160) for modulating at least the measurement of relative direction in an analog form, or a frequency or phase encoded form.

7. An apparatus as claimed in any of the preceding claims, further including means for providing an identity, or for receiving an identity and wherein the apparatus is further adapted to transmit the identity.

8. An apparatus as claimed in claim 6, in which the modulator (106) is a single sideband suppressed carrier modulator.

9. An apparatus as claimed in any of the preceding claims, comprising a plurality of receive antennas (130, 132, 160, 170), such that pairs of antennas of dissimilar spacings can be provided.

10. An apparatus as claimed in any of the preceding claims in which a plurality of transmit antennas are provided so as to provide signal path diversity.

11. A radar system comprising a radar in co-operation with at least one apparatus as claimed in any of the preceding claims, the radar adapted to be responsive to a return signal as modulated by the apparatus so as to extract the data thereon.

FIG. 1

FIG. 2a

FIG. 2b

EP 2 372 385 A1

FIG. 3

FIG. 4

84

82        80

FIG. 5

82a    84a    80a

EP 2 372 385 A1

FIG. 6

EP 2 372 385 A1

FIG. 7

EP 2 372 385 A1

FIG. 8

EP 2 372 385 A1

FIG. 9

EP 2 372 385 A1

FIG. 10

FIG. 11

EP 2 372 385 A1

19

Europäisches
Patentamt
European
Patent Office
Office européen
des brevets

**EUROPEAN SEARCH REPORT**

Application Number

EP 11 15 7390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 420 996 B1 (STOPCZYNSKI LAWRENCE GERARD [US] ET AL) 16 July 2002 (2002-07-16) * abstract; figure 1 * * column 2, lines 1-61 * * column 3, lines 42-56 * * column 7, line 6 - column 8, line 43 * | 1-11 | INV. G01S3/48 G01S13/82 |
| Y | US 4 109 247 A (KAPLAN GERALD STANLEY) 22 August 1978 (1978-08-22) * abstract; figure 1 * * column 1, line 62 - column 2, line 13 * * column 2, lines 42-61 * | 1-11 | |
| A | US 2009/179799 A1 (KAWASAKI YOSHINOBU [JP]) 16 July 2009 (2009-07-16) * abstract; figures 1-9 * | 1-4,9,10 | |

TECHNICAL FIELDS
SEARCHED (IPC)

G01S

The present search report has been drawn up for all claims

| Place of search | Date of completion of the search | Examiner |
|---|---|---|
| Munich | 15 July 2011 | López de Valle, J |

EPO FORM 1503 03.82 (P04C01)

## ANNEX TO THE EUROPEAN SEARCH REPORT
## ON EUROPEAN PATENT APPLICATION NO.

EP 11 15 7390

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2011

| Patent document cited in search report | | Publication date | Patent family member(s) | | Publication date |
|---|---|---|---|---|---|
| US 6420996 | B1 | 16-07-2002 | DE 10233163 A1<br>GB 2381400 A | | 03-04-2003<br>30-04-2003 |
| US 4109247 | A | 22-08-1978 | NONE | | |
| US 2009179799 | A1 | 16-07-2009 | JP 2009168498 A | | 30-07-2009 |

EPO FORM P0459

For more details about this annex : see Official Journal of the European Patent Office, No. 12/82